# EUROPEAN PATENT APPLICATION

(11) **EP 4 589 759 A1**
(43) Date of publication of application: **23.07.2025**
(21) Application number: 23864995.8
(22) Date of filing: 01.06.2023
(51) Int. Cl.: H01M 50/559, H01M 50/107, H01M 50/152, H01M 50/167, H01M 50/179, H01M 50/342, H01M 50/533, H01M 50/545, H01M 50/548, H01M 50/566, H01M 50/567

(54) **BATTERY**

(30) Priority: 14.09.2022 JP 2022146046
(71) Applicant: Panasonic Energy Co., Ltd., Osaka 570-8511 (JP)
(72) Inventor: MIZUNO, Kenji, Osaka 571-0057 (JP)
(74) Representative: Eisenführ Speiser
(86) International application number: PCT/JP2023/020513
(87) International publication number: WO 2024/057631

(57) **Abstract**

A disclosed battery 10 includes: a battery can 11 of a bottomed tubular shape having an opening at one end; an electrode group 14 housed in the battery can 11, and having a first electrode 14a and a second electrode 14b; an electrode terminal 16 penetrating the bottom of the battery can 11, and insulated from the battery can 11; and a sealing plate 21 sealing the opening of the battery can 11. The electrode terminal 16 is electrically connected to the first electrode 14a. The battery can 11 is electrically connected to the second electrode 14b. This can simplify the sealing structure.

## Description

### [Technical Field]

The present disclosure relates to a battery.

### [Background Art]

Conventionally, there has been known a battery including a battery can of a bottomed tubular shape having an opening at one end, an electrode group housed in the battery can and including a positive electrode and a negative electrode, and a sealing body sealing the opening of the battery can (e.g., Patent Literature 1). In the battery of Patent Literature 1, the positive electrode and the sealing body are electrically connected to each other, and the negative electrode and the battery can are electrically connected to each other.

### [Citation List]

### [Patent Literature]

Patent Literature 1: Japanese Laid-Open Patent Publication No. 2021-166195

### [Summary of Invention]

### [Technical Problem]

However, the sealing body of the battery of Patent Literature 1 has a complex structure, which is constituted of a relatively large number of component parts (specifically, a filter, a lower valve body, an insulating member, an upper valve body, and a cap). Under such circumstances, one of the objectives of the present disclosure is to simplify the sealing structure.

### [Solution to Problem]

One aspect according to the present disclosure relates to a battery, including: a battery can of a bottomed tubular shape having an opening at one end; an electrode group housed in the battery can, and having a first electrode and a second electrode; an electrode terminal penetrating a bottom of the battery can, and insulated from the battery can; and a sealing plate sealing the opening of the battery can, wherein the electrode terminal is electrically connected to the first electrode, and the battery can is electrically connected to the second electrode.

### [Advantageous Effects of Invention]

According to the present disclosure, it is possible to simplify the sealing structure.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal sectional view of an example of a battery according to the present disclosure.
[FIG. 2] A schematic oblique view of an example of an end-face current collecting plate.

### [Description of Embodiments]

Embodiments of the present disclosure will be described below by way of examples, but the present disclosure is not limited to the examples described below. The present disclosure, however, is not limited to the examples described below. **In** the following description, specific numerical values and materials are exemplified in some cases, but other numerical values and other materials may be adopted as long as the effects of the present disclosure can be obtained.

The battery according to the present disclosure may be a primary battery, such as a lithium primary battery, and may be a secondary battery, such as an alkaline storage battery (e.g., nickel-metal hydride storage battery, nickel-cadmium battery), a lithium-ion secondary battery, and a lithium-metal secondary battery. **In** the present disclosure, a power storage device (e.g., lithium-ion capacitor) in which at least one of the positive and negative electrodes is an electrode that exhibits capacity through a Faradaic reaction is also included in the category of a secondary battery. The battery according to the present disclosure includes a battery can, an electrode group, an electrode terminal, and a sealing plate.

The battery can is formed in a bottomed tubular shape having an opening at one end. The battery can may be, for example, of a bottomed round tubular shape or bottomed square tubular shape. The battery can is constituted of an electrical conductor (e.g., metal). The battery can is electrically connected to a second electrode of the electrode group.

The electrode group has a first electrode and a second electrode. The electrode group may be, for example, a wound electrode group formed by winding the first electrode and the second electrode, with a separator interposed therebetween. The outer shape of the electrode group may be, for example, cylindrical or prismatic. One of the first and second electrodes is a positive electrode, and the other one of the first and second electrodes is a negative electrode.

The first electrode, the second electrode, and the separator may be each shaped like a long sheet (or a belt). The first electrode may have a long sheet-shaped first current collector, and a first active material layer supported on the first current collector. The second electrode may have a long sheet-shaped second current collector, and a second active material layer supported on the second current collector. The separator may be constituted of a porous sheet having ion permeability and insulation properties. Examples of the porous sheet include a thin film having microporous pores, a woven fabric, and a nonwoven fabric.

**In** the following, with a lithium-ion secondary battery taken as an example, the first active material layer may be provided on both sides of the first current collector or on one side of the first current collector. When the first electrode is a positive electrode, the first current collector is a positive electrode current collector (which can be constituted of, for example, an aluminum foil or an aluminum alloy foil), and the first active material layer is a positive electrode active material layer (which can contain, for example, a lithium-containing transition metal oxide). When the first electrode is a negative electrode, the first current collector is a negative electrode current collector (which can be constitute of, for example, a copper foil or a copper alloy foil), and a negative electrode active material layer (which can contain, for example, a carbonaceous material) may be provided as the first active material layer.

The electrode terminal penetrates the bottom of the battery can and is insulated from the battery can. The electrode terminal is constituted of a conductor (e.g., metal). The electrode terminal may have a protrusion protruding outward from the bottom of the battery can. The electrode terminal may be insulated from the battery can by a gasket. The electrode terminal is electrically connected to the first electrode of the electrode group.

The sealing plate seals the opening of the battery can. The sealing plate may have a shape that corresponds to the shape of the battery can. For example, the sealing plate may be approximately circular plate-shaped or square plate-shaped. The sealing plate may be constituted of a conductor (e.g., metal), and may be constituted of an insulating material (e.g., resin). The sealing plate may be fixed to the battery can via a gasket. The sealing plate may or may not be electrically connected to the battery can. The sealing plate may not necessarily be electrically connected to each electrode of the electrode group, and has a simple structure because it is not constituted of a number of component parts. By using such a sealing plate, the sealing structure of the battery can be simplified. Note that the sealing plate may be electrically connected to either one of the electrodes of the electrode group.

The sealing plate may have an explosion-proof mechanism that activates when the internal pressure of the battery can exceeds a predetermined value. The explosion-proof mechanism may be constituted of, for example, a thin-walled portion formed in the sealing plate. Here, in the battery of Patent Literature 1, such an explosion-proof mechanism is to be provided on the side opposite to the sealing body sealing the opening of the battery can, that is, on the bottom side of the battery can. In that case, designing for realizing an appropriate relationship between the pressure resistance strength (or operating pressure) of the explosion-proof mechanism and the pressure resistance strength of the sealing body can be relatively complicated and troublesome. In this regard, the sealing plate of the present disclosure seals the opening of the battery can, and has an explosion-proof mechanism. It is possible therefore to realize an appropriate relationship between the pressure resistance strength of the explosion-proof mechanism and the pressure resistance strength of the sealing plate, without the necessity of complicated and troublesome designing.

The battery may further include a current collecting plate electrically connected to the second electrode, and welded to the battery can. The current collecting plate may be welded to the battery can on a more inner side of the battery can than the sealing plate. In this configuration, at least via the current collecting plate, the second electrode and the battery can are electrically connected to each other. Here, the battery typically includes an electrolyte (electrolyte solution) which is housed together with the electrode group within the battery can. In the manufacturing process of the battery of Patent Literature 1, a necessity occurs that a step of welding the sealing body is to be performed after the electrolyte is housed in the battery can. This may cause leakage of part of the electrolyte during welding, which necessitates to refill the leaked amount of electrolyte after welding. **In** this regard, in the manufacturing process of the battery of the present disclosure, the electrolyte is housed in the battery can after the current collecting plate is welded, and no welding is necessary in the subsequent step of attaching the sealing plate. Therefore, the problem of electrolyte leakage as mentioned above is unlikely to occur.

A recess recessed toward the radially inner side of the battery can may be formed near the opening of the battery can. The recess may have a flat portion extending orthogonally to the axial direction of the battery can, as seen in a longitudinal sectional view passing through the center of the battery can. The current collecting plate may be welded to the flat portion of the recess. The recess may extend in the circumferential direction of the battery can, and preferably extends around the entire circumference of the battery can. Such a recess may be formed by a so-called drawing process. **In** the step of welding the current collecting plate to the flat portion of the recess, the current collecting plate can be placed on the flat portion while being in surface contact therewith, which facilitates the welding work and can improve the welding quality.

The electrode terminal may have a first terminal portion exposed outside the battery can and a second terminal portion riveted to the first terminal portion. The first terminal portion may be formed, for example, in an annular or ring shape. The second terminal portion may have, for example, a plate-shaped (e.g., disk-shaped) base portion and a columnar portion protruding from the base portion and riveted to the first terminal portion. According to this configuration, the electrode terminal becomes less likely to be disengaged from the battery can when the internal pressure of the battery rises.

The sealing plate may have an outer edge portion crimp-fixed by the battery can, and an inner portion provided closer to the center than the outer edge portion. A step portion may be provided between the outer edge portion and the inner portion so that the inner portion is positioned more outward of the battery can than the outer edge portion. With this configuration, the battery can be conveyed by gripping the step portion of the sealing plate. This is particularly useful in the cases where it is undesirable to grip the portion where the sealing plate has been crimp-fixed.

The first electrode may be a positive electrode. The second electrode may be a negative electrode. **In** this case, the electrode terminal electrically connected to the first electrode serves as an external positive electrode terminal, while the battery can electrically connected to the second electrode serves as an external negative electrode terminal.

The sealing plate may be constituted of one plate-shaped member. In this case, the sealing structure of the battery can be more simplified.

As described above, according to the present disclosure, it is possible to simplify the sealing structure of the battery by using a sealing plate having a simple structure. Furthermore, according to the present disclosure, it is possible to suppress the electrolyte leakage from the battery can.

In the following, an example of the battery according to the present disclosure will be specifically described with reference to the drawings. To the constituent elements of the below-described example of the battery, the constituent elements as described above can be applied. The constituent elements of the below-described example of the battery can be modified based on the description above. The matters as described below may be applied to the above embodiments. Of the constituent elements of the below-described example of the battery, the constituent elements which are not essential to the battery according to the present disclosure may be omitted. Note that the figures below are schematic and not intended to accurately reflect the shape and the number of the actual members.

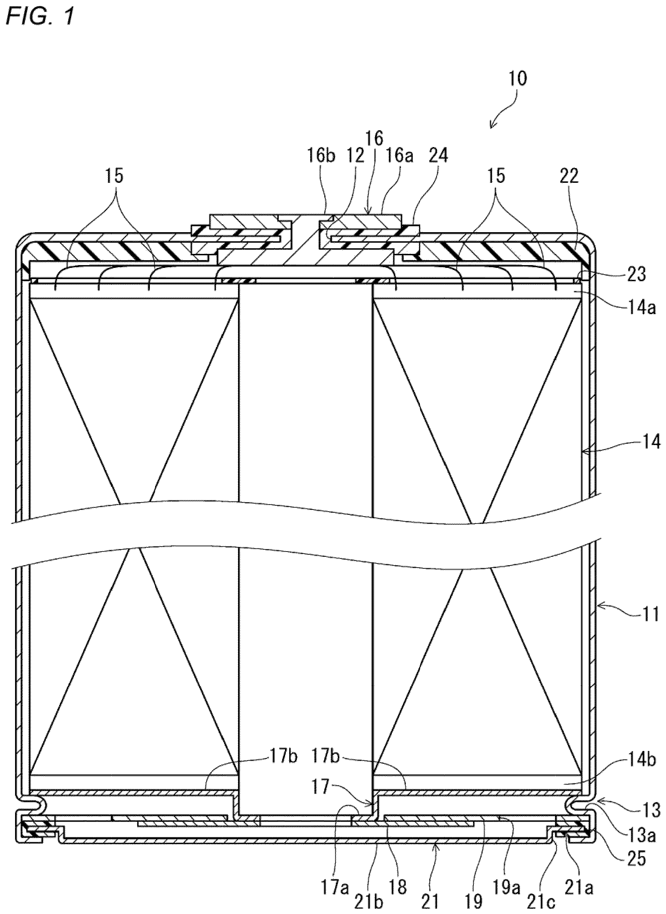

A battery 10 in the present embodiment is a secondary battery capable of repeated charging and discharging, and may be, for example, a lithium-ion secondary battery or a lithium secondary battery (lithium-metal secondary battery). As shown in FIG. 1, the battery 10 has a battery can 11, an electrode group 14, a positive electrode terminal 16, an end-face current collecting plate 17, a negative electrode current collecting plate 19, and a sealing plate 21.

The battery can 11 is formed in a bottomed cylindrical shape having an opening at one end (bottom end in FIG. 1). The battery can 11 is constituted of a metal. A through-hole 12 for insertion of the positive electrode terminal 16 therethrough is formed in the center of the bottom of the battery can 11. The battery can 11 houses the electrode group 14, together with an electrolyte solution (not shown). A recess 13 recessed toward the radially inner side of the battery can 11 is formed near the opening of the battery can 11. The recess 13 has a flat portion 13a extending orthogonally to the axial direction of the battery can 11, as seen in a longitudinal sectional view passing through the center of the battery can 11 (sectional view of FIG. 1).

The electrode group 14 has a positive electrode 14a and a negative electrode 14b. The electrode group 14 is a wound electrode group formed by winding the positive electrode 14a and the negative electrode 14b, with a separator (not shown) interposed therebetween. The electrode group 14 is approximately cylindrical in shape as a whole. A plurality (eight, in this example) of positive electrode tabs 15 made of a conductor are connected to the positive electrode 14a. The positive electrode 14a is an example of the first electrode. The negative electrode 14b is an example of the second electrode.

Between the electrode group 14 and the bottom of the battery can 11, an insulating member 22 for providing electrical insulation therebetween is disposed. The insulating member 22 is constituted of, for example, an insulating resin. The insulating member 22 may be attached to the bottom of the battery can 11.

The positive electrode terminal 16 is inserted through the through-hole 12 in the bottom of the battery can 11, and penetrates the bottom of the battery can 11. The positive electrode terminal 16 is constituted of a metal. The positive electrode terminal 16 is insulated from the battery can 11 by a positive electrode gasket 24 constituted of an insulating material. The positive electrode terminal 16 has a first terminal portion 16a exposed outside the battery can 11, and a second terminal portion 16b riveted to the first terminal portion 16a. The first terminal portion 16a and the second terminal portion 16b may be further welded (e.g., laser welded) to each other. To the second terminal portion 16b, the aforementioned positive electrode tabs 15 are connected by, for example, ultrasonic welding. Thus, the positive electrode terminal 16 is electrically connected to the positive electrode 14a. Between the positive electrode terminal 16 and the electrode group 14, an insulating plate 23 for providing electrical insulation therebetween is disposed. The positive electrode terminal 16 is an example of the electrode terminal.

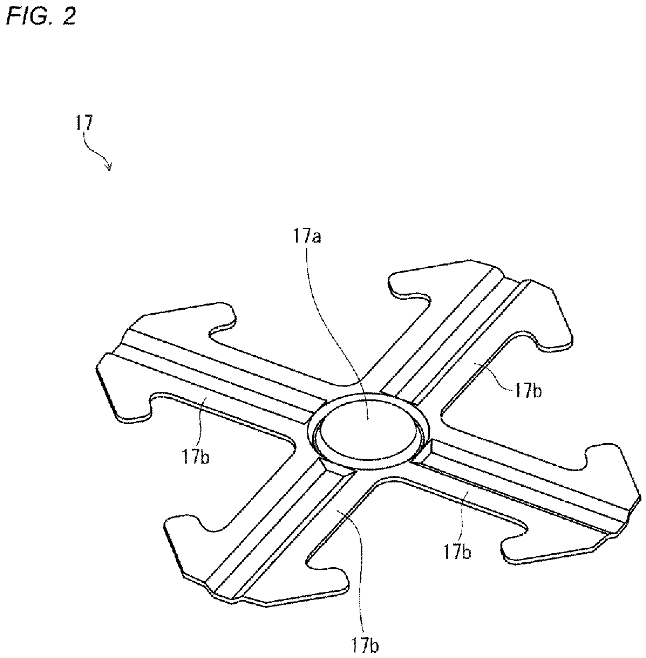

The end-face current collecting plate 17 is constituted of a metal and, especially as shown in FIG. 2, has a center portion 17a, and a plurality (four, in this example) of arm portions 17b extending radially outward from the center portion 17a. The end-face current collecting plate 17 is approximately cross-shaped as a whole, but not limited thereto. Each of the arm portions 17b is connected to the negative electrode 14b of the electrode group 14 by, for example, laser welding.

The negative electrode current collecting plate 19 is electrically connected to the end-face current collecting plate 17 via a linking plate 18 made of metal (which can be formed, for example, in a ring shape). Thus, the negative electrode current collecting plate 19 is electrically connected to the negative electrode 14b. The negative electrode current collecting plate 19 and the linking plate 18 may be welded (e.g., laser welded) to each other. The linking plate 18 and the end-face current collecting plate 17 may be welded (e.g., laser welded) to each other. Note that the negative electrode current collecting plate 19 may be directly connected to the end-face current collecting plate 17. In this case, the linking plate 18 is not necessary. The negative electrode current collecting plate 19 has one or more injection holes 19a for injecting electrolyte solution therefrom into the battery can 11. The negative electrode current collecting plate 19 is welded (e.g., laser welded) to the aforementioned flat portion 13a of the battery can 11 at its outer edge portion. The negative electrode current collecting plate 19 is welded to the battery can 11 on a more inner side of the battery can 11 (upper side in Fig. 1) than the sealing plate 21. Thus, the battery can 11 is electrically connected to the negative electrode 14b, via the negative electrode current collecting plate 19, etc. The negative electrode current collecting plate 19 is an example of the current collecting plate.

The sealing plate 21 seals the opening of the battery can 11. The sealing plate 21 is constituted of a metal and is approximately disc-shaped. The sealing plate 21 is insulated from the battery can 11 by a negative electrode gasket 25. The sealing plate 21 of the present embodiment is electrically connected neither to the positive electrode 14a nor to the negative electrode 14b of the electrode group 14, but is not limited thereto. The sealing plate 21 has an explosion-proof mechanism (not shown) that activates when the internal pressure of the battery can 11 exceeds a predetermined value. The sealing plate 21 has an outer edge portion 21a which is crimp-fixed by the battery can 11, and an inner portion 21b which is provided closer to the center than the outer edge portion 21a. Between the outer edge portion 21a and the inner portion 21b, a step portion 21c is provided so that the inner portion 21b is positioned more outward of the battery can 11 (lower side in FIG. 1) than the outer edge portion 21a.

### <<Supplementary notes>>

The above description of embodiments discloses the following techniques.

### (Technique 1)

A battery, comprising:
a battery can of a bottomed tubular shape having an opening at one end;
an electrode group housed in the battery can, and having a first electrode and a second electrode;
an electrode terminal penetrating a bottom of the battery can, and insulated from the battery can; and
a sealing plate sealing the opening of the battery can, wherein
the electrode terminal is electrically connected to the first electrode, and
the battery can is electrically connected to the second electrode.

### (Technique 2)

The battery according to technique 1, wherein the sealing plate has an explosion-proof mechanism that activates when an internal pressure of the battery can exceeds a predetermined value.

### (Technique 3)

The battery according to technique 1 or 2, further comprising
a current collecting plate electrically connected to the second electrode, and welded to the battery can, wherein
the current collecting plate is welded to the battery can on a more inner side of the battery can than the sealing plate.

### (Technique 4)

The battery according to technique 3, wherein
a recess recessed toward a radially inner side of the battery can is formed near the opening of the battery can,
the recess has a flat portion extending orthogonally to an axial direction of the battery can, as seen in a longitudinal sectional view passing through a center of the battery can, and
the current collecting plate is welded to the flat portion of the recess.

### (Technique 5)

The battery according to any one of techniques 1 to 4, wherein the electrode terminal has a first terminal portion exposed outside the battery can, and a second terminal portion riveted to the first terminal portion.

### (Technique 6)

The battery according to any one of techniques 1 to 5, wherein
the sealing plate has an outer edge portion crimp-fixed by the battery can, and an inner portion provided closer to a center than the outer edge portion, and
a step portion is provided between the outer edge portion and the inner portion so that the inner portion is positioned more outward of the battery can than the outer edge portion.

### (Technique 7)

The battery according to any one of techniques 1 to 6, wherein
the first electrode is a positive electrode, and
the second electrode is a negative electrode.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The present disclosure is applicable to a battery.

### [Reference Signs List]

10: battery
11: battery can
12: through-hole
13: recess
   13a: flat portion
14: electrode group
   14a: positive electrode (first electrode)
   14b: negative electrode (second electrode)
15: positive electrode tab
16: positive electrode terminal (electrode terminal)
   16a: first terminal portion
   16b: second terminal portion
17: end-face current collecting plate
   17a: center portion
   17b: arm portion
18: linking plate
19: negative electrode current collecting plate (current collecting plate)
   19a: injection hole
21: sealing plate
   21a: outer edge portion
   21b: inner portion
   21c: step portion
22: insulating member
23: insulating plate
24: positive electrode gasket
25: negative electrode gasket

## Claims

1. A battery, comprising:
a battery can of a bottomed tubular shape having an opening at one end;
an electrode group housed in the battery can, and having a first electrode and a second electrode;
an electrode terminal penetrating a bottom of the battery can, and insulated from the battery can; and
a sealing plate sealing the opening of the battery can, wherein
the electrode terminal is electrically connected to the first electrode, and
the battery can is electrically connected to the second electrode.

2. The battery according to claim 1, wherein the sealing plate has an explosion-proof mechanism that activates when an internal pressure of the battery can exceeds a predetermined value.

3. The battery according to claim 1 or 2, further comprising
a current collecting plate electrically connected to the second electrode, and welded to the battery can, wherein
the current collecting plate is welded to the battery can on a more inner side of the battery can than the sealing plate.

4. The battery according to claim 3, wherein
a recess recessed toward a radially inner side of the battery can is formed near the opening of the battery can,
the recess has a flat portion extending orthogonally to an axial direction of the battery can, as seen in a longitudinal sectional view passing through a center of the battery can, and
the current collecting plate is welded to the flat portion of the recess.

5. The battery according to claim 1 or 2, wherein the electrode terminal has a first terminal portion exposed outside the battery can, and a second terminal portion riveted to the first terminal portion.

6. The battery according to claim 1 or 2, wherein
the sealing plate has an outer edge portion crimp-fixed by the battery can, and an inner portion provided closer to a center than the outer edge portion, and
a step portion is provided between the outer edge portion and the inner portion so that the inner portion is positioned more outward of the battery can than the outer edge portion.

7. The battery according to claim 1 or 2, wherein
the first electrode is a positive electrode, and
the second electrode is a negative electrode.
